# EUROPEAN PATENT APPLICATION

(11) **EP 4 597 695 A2**
(43) Date of publication of application: **06.08.2025**
(21) Application number: 25153454.1
(22) Date of filing: 23.01.2025
(51) Int. Cl.: H01M 50/103, H01M 50/15, H01M 50/176, H01M 50/184, H01M 50/186, H01M 50/188, H01M 50/593, H01M 50/553

(54) **BATTERY TOP COVER, BATTERY, BATTERY PACK, AND ELECTRICAL DEVICE**

(30) Priority: 30.01.2024 CN 202410131477; 30.01.2024 CN 202420229688 U; 08.08.2024 WO PCT/CN2024/110636
(71) Applicant: HUIZHOU EVE POWER CO., LTD, Huizhou, Guangdong 516039 (CN); Eve Power Co., Ltd., Jingmen, Hubei 448000 (CN)
(72) Inventor: WU, Xueyin, Huizhou, 516039 (CN); SHU, Kuanjin, Huizhou, 516039 (CN); DUAN, Dong, Huizhou, 516039 (CN); LIU, Ziwen, Huizhou, 516039 (CN); HE, Wei, Huizhou, 516039 (CN)
(74) Representative: Berggren Oy

(57) **Abstract**

A battery top cover, a battery, a battery pack, and an electrical device are provided. The battery top cover includes a terminal (100), a lower plastic component (200), a cover plate (300), and a sealing ring (400). The terminal includes a base (120) and a terminal body (110) disposed on the base. A first terminal hole (310) is formed in the cover plate. The terminal body passes through the lower plastic component, the sealing ring, and the first terminal hole in sequence. The base is located on a side, facing away from the cover plate, of the lower plastic component. The lower plastic component includes an elastic part. Two ends of the sealing ring are respectively abutted against the base and the cover plate. One side of the lower plastic component is elastically abutted against one of the base and the cover plate through the elastic part, and the other side is directly abutted against the other.

## Description

### TECHNICAL FIELD

The present application relates to the technical field of batteries, and in particular to battery top covers, batteries, battery packs, and electrical devices.

### BACKGROUND

A square battery is mainly composed of an aluminum casing for a battery cell and a battery top cover. The aluminum casing for a battery cell provides a sealing space for the battery cell to accommodate an electrode assembly and an electrolyte. The battery top cover includes a terminal, a lower plastic component, a cover plate, and other components.

### SUMMARY

The sealing performance of a battery top cover in the related art is poor.

In a first aspect, the present application provides a battery top cover including: a terminal, a lower plastic component, a cover plate, and a sealing ring. The terminal includes a base and a terminal body disposed on the base. A first terminal hole is formed in the cover plate. The terminal body passes through the lower plastic component, the sealing ring, and the first terminal hole in sequence. The base is located on a side, facing away from the cover plate, of the lower plastic component, and two ends of the sealing ring are respectively abutted against the base and the cover plate.

In a second aspect, the present application further provides a battery including the battery top cover as described in the first aspect.

In a third aspect, the present application further provides a battery including:
a casing;
a battery top cover, including a cover plate and an upper plastic component, in which the cover plate closes an opening of the casing, and the upper plastic component is disposed on a side, away from the casing, of the cover plate; and
a top cover insulation sheet, disposed on a surface, away from the casing, of the cover plate, in which a first through hole is formed in the top cover insulation sheet, the upper plastic component passes through the first through hole, and the top cover insulation sheet is attached to a side wall of the upper plastic component.

In a fourth aspect, the present application further provides a battery pack including multiple batteries as described above.

In a fifth aspect, the present application further provides an electrical device including the battery pack configured for providing electricity.

### BENEFICIAL EFFECTS

In the battery top cover provided in the present application, the terminal body passes through the lower plastic component, the sealing ring, and the first terminal hole in sequence, the base is disposed on the side, facing away from the cover plate, of the lower plastic component, and the two ends of the sealing ring are respectively abutted against the base and the cover plate, so that the compression range of the sealing ring is ensured, and the sealing performance of the battery top cover is improved, thus the sealing performance of the battery is improved.

In the battery, battery pack and electrical device provided in the present application, the top cover insulation sheet is attached to a side wall of the upper plastic component, and an assembly gap between the top cover insulation sheet and the upper plastic component is avoided, so that the insulation performance of the battery top cover is improved, and the safety of the battery ground is enhanced, thus the safety of the battery pack and the electrical device is improved.

### BRIEF DESCRIPTION OF THE DRAWINGS

FIG. 1 is a planar schematic diagram of a structure of a battery top cover provided in an embodiment of the present application;
FIG. 2 is a three-dimensional schematic diagram of a structure of a battery top cover provided in an embodiment of the present application;
FIG. 3 is a schematic diagram of a structure of a connection between a lower plastic component and a cover plate provided in an embodiment of the present application;
FIG. 4 is a top view of a structure of a lower plastic component provided in an embodiment of the present application;
FIG. 5 is a partially enlarged schematic diagram of a structure at position A in FIG. 4.
FIG. 6 is a side view of a structure of a lower plastic component provided in an embodiment of the present application;
FIG. 7 is a partially enlarged schematic diagram of a structure at position B in FIG. 6.
FIG. 8 is a schematic diagram of a structure of a connection between a lower plastic component and a terminal post provided in an embodiment of the present application;
FIG. 9 is a schematic diagram of a structure of an upper plastic component provided in an embodiment of the present application;
FIG. 10 is a schematic diagram of a structure of a terminal provided in an embodiment of the present application;
FIG. 11 is a schematic diagram of a first internal texture structure of a terminal provided in an embodiment of the present application;
FIG. 12 is a schematic diagram of a second internal texture structure of a terminal provided in an embodiment of the present application;
FIG. 13 is a schematic diagram of a third internal texture structure of a terminal provided in an embodiment of the present application;
FIG. 14 is a three-dimensional schematic diagram of a structure of the battery provided in an embodiment of the present application;
FIG. 15 is an exploded schematic diagram of a battery provided in an embodiment of the present application;
FIG. 16 is an assembly schematic diagram of a battery provided in an embodiment of the present application;
FIG. 17 is a partially enlarged schematic diagram of a battery provided in an embodiment of the present application;
FIG. 18 is a top view expansion diagram of a top cover insulation sheet provided in an embodiment of the present application; and
FIG. 19 is an enlarged schematic diagram of a second attachment surface provided in an embodiment of the present application.

### Reference numerals in the drawings:

100: terminal; 200: lower plastic component; 300: cover plate; 400: sealing ring; 500: upper plastic component; 600: terminal post; 110: terminal body; 120: base; 210: main body; 220: tab; 230: first bottom plate; 240: first side plate; 250: second side plate; 260: third terminal hole; 310: first terminal hole; 510: second terminal hole; 520: third side plate; 530: fourth side plate; 540: second bottom plate; 550: boss; 610: fourth terminal hole; 221: connecting part; 222: abutting part;
10: battery; 11: casing; 12: top cover insulation sheet; 13: first insulation layer;
301: first attachment surface; 302: second attachment surface; 303: third attachment surface; 304: first through hole; 305: incision; 306: first fold; 307: second fold; 308: edge line.

### DETAILED DESCRIPTION

Inventors found through research that a sealing ring of a battery top cover of the related art has a fixed space limit, resulting in a reduced control range of a compression amount of the sealing ring and poor sealing performance of the battery top cover.

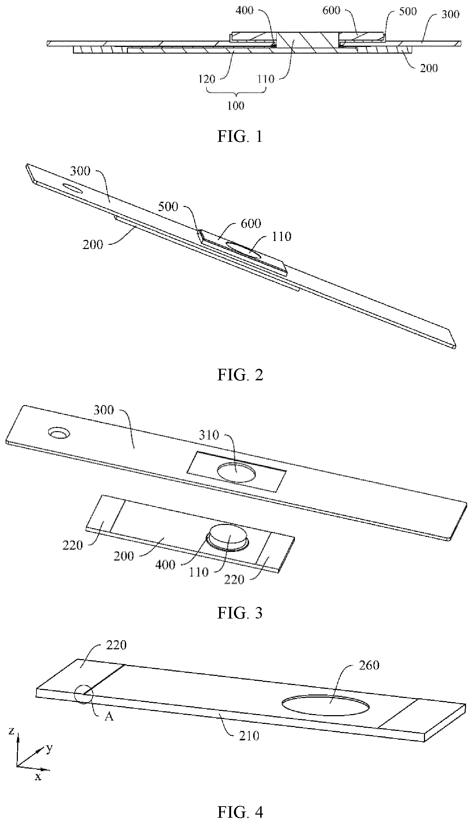

In order to solve the above problems, as shown in FIG. 1 to FIG. 10, this embodiment provides a battery top cover including: a terminal 100, a lower plastic component 200, a cover plate 300, and a sealing ring 400. The terminal 100 includes a base 120 and a terminal body 110 disposed on the base 120. A first terminal hole 310 is formed in the cover plate 300. The terminal body 110 passes through the lower plastic component 200, the sealing ring 400 and the first terminal hole 310 in sequence. The base 120 is located on a side, facing away from the cover plate 300, of the lower plastic component 200. An elastic part is arranged at a side of the lower plastic component 200. The side of the lower plastic component 200 is elastically abutted against one of the base 120 or the cover plate 300 through the elastic part, and another side is directly abutted against another one of the base 120 or the cover plate 300. The "directly abutted against" mentioned here is only relative to the elastic part, and it does not exclude embodiments where there are other components than the elastic part between the lower plastic component 200 and the cover plate 300 or the base 120.

In some embodiments, an elastic part is arranged on a side, close to the cover plate 300, of the lower plastic component 200, so that the side, close to the cover plate 300, of the lower plastic component 200 is elastically abutted against the cover plate 300 through the elastic part, and a side, close to the base 120, of the lower plastic component 200 is directly abutted against the base 120. The elastic part may elastically expand and contract between the cover plate 300 and the base 120 to adjust a gap between the cover plate 300 and the base 120. The sealing ring 400 is clamped between the base 120 and the cover plate 300. The base 120 and the cover plate 300 may be closer to each other when compressing the sealing ring 400, so that the sealing ring 400 is compressed thinner, so that the compression range of the sealing ring 400 is ensured and the sealing performance of the battery top cover is improved.

In other embodiments, an elastic part is arranged on a side, close to the base 120, of the lower plastic component 200, so that the side, close to the base 120, of the lower plastic component 200 is elastically abutted against the base 120 through the elastic part, and a side, close to the cover plate 300, of the lower plastic component 200 is directly abutted against the cover plate 300. The elastic part may also elastically expand and contract between the cover plate 300 and the base 120 to adjust the gap between the cover plate 300 and the base 120. The sealing ring 400 is clamped between the base 120 and the cover plate 300. The base 120 and the cover plate 300 may be closer to each other when compressing the sealing ring 400, so that the sealing ring 400 is compressed thinner, so that the compression range of the sealing ring 400 is ensured and the sealing performance of the battery top cover is improved.

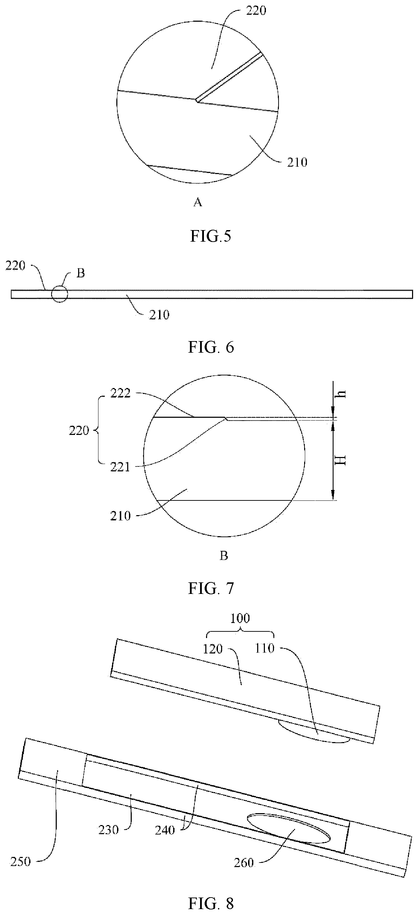

In some embodiments, the cover plate 300 is a polished aluminum plate. The battery top cover may include at least two lower plastic components 200 disposed at intervals on different sides of the terminal body 110, or the battery top cover may include only one lower plastic component 200. Referring to FIG. 4 and FIG. 8, in case that the battery top cover includes one lower plastic component 200, a third terminal hole 260 for the terminal body 110 to pass through is formed in the lower plastic component 200.

In some embodiments, continuing to refer to FIG. 4 to FIG. 7, the lower plastic component 200 further includes a main body 210, the elastic part includes a tab 220, and the tab 220 is connected to the main body 210 and spaced apart from the main body 210 at a non-connected position. In this embodiment, referring to FIG. 4, the elastic part includes two tabs 220, and the two tabs 220 are connected to the main body 210 and disposed at intervals on the main body 210. The tabs 220 are arranged on a side, close to the cover plate 300, of the lower plastic component 200, and the third terminal hole 260 is arranged in a recessed part formed between the two tabs 220, gaps between the tabs 220 and the main body 210 are formed at non-connected positions, so that a movable displacement is reserved for the base 120 when the base 120 is abutted against the cover plate 300 through the lower plastic component 200. The amount of movable displacement is a value of the gap between the tab 220 and the main body 210. A thickness of a part of the sealing ring 400 being compressed is equal to a distance between the base 120 and the cover 300, so that an amount of space is left for the sealing ring 400 to buffer compression, which improves the sealing performance of the battery top cover.

In some embodiments, continuing to refer to FIG. 4 to FIG. 7, a cross section of the tab 220 is in a shape of a trapezoid. Referring to FIG. 4, the cross section of the tab 220 refers to the cross section of the tab 220 in a XZ plane, where a X direction is a length direction of the main body 210, and a Z direction is a thickness (height) direction of the main body 210. Combined with FIG. 6 and FIG. 7, the cross section of the tab 220 is arranged in a shape of a trapezoid, the tab 220 includes two connecting parts 221 on both sides and an abutting part 222 between the two connecting parts 221, and the connecting parts 221 are connected to the main body 210. The abutting part 222 is spaced apart from the main body 210. The connecting part 221 on at least one side of the tab 220 is inclined to facilitate the bending of the inclined connecting part 221 when the base 120 is abutted against the cover plate 300 through the lower plastic component 200. The abutting part 222 is close to the main body 210, so that the tab 220 is elastically compressed to reduce a distance between the base 120 and the cover plate 300, thereby ensuring the compression range of the sealing ring 400 and improving the sealing performance of the battery top cover. In other embodiments, the cross section of the tab 220 may be set in a shape of an arc.

In some embodiments, the elastic part is integrally formed with the lower plastic component 200. As such, process complexity and cost of the battery top cover may be reduced. In other embodiments, the elastic part may be set as an elastic part independent of the lower plastic component 200, and an elastic coefficient of the elastic part is less than an elastic coefficient of the sealing ring 400.

In some embodiments, referring to FIG. 8, the lower plastic component 200 includes a first bottom plate 230, two first side plates 240 arranged opposite to each other, and two second side plates 250 arranged opposite to each other. The two first side plates 240 and the two second side plates 250 are disposed on a peripheral side of the first bottom plate 230. The first bottom plate 230, the two first side plates 240, and two second side plates 250 are enclosed to form a first accommodation space, and the base 120 is located in the first accommodation space, so that a space in the battery is avoided from being occupied by the base 120, and a space utilization rate of the battery is increased.

In some embodiments, continuing to refer to FIG. 3 and FIG. 8, a number of the elastic parts is two, the two elastic parts are respectively disposed on sides, close to the cover plate 300, of the two second side plates 250. The third terminal hole 260 is formed in the first bottom plate 230. A length of the second side plate 250 is greater than a length of the elastic part, and a width of the second side plate 250 is greater than or equal to a width of the elastic part. As such, a gap may be formed between the cover plate 300 and the lower plastic component 200, and an amount of space is left for the sealing ring 400 to buffer compression, thereby improving the sealing performance of the battery top cover.

In an embodiment, a width of the elastic part is less than or equal to a width of the second side plate 250, and the width of the elastic part is greater than or equal to two-thirds of the width of the second side plate 250. The width of the elastic part is set to be less than or equal to the width of the second side plate 250, so that an additional space in the battery is avoided from being occupied by the elastic part. The width of the elastic part is set to be greater than or equal to two-thirds of the width of the second side plate 250, so that the compression range of the sealing ring 400 is ensured, and the sealing performance of the battery top cover is improved.

In some embodiments, a sum of a height of the first bottom plate 230 and a height of the bottom plate 120 is equal to a height of the second side plate 250, so that the bottom plate 120 is disposed behind the first accommodation space. A side, facing away from the first bottom plate 230, of the bottom plate 120 is flush with a side, facing away from the cover plate 300, of the second side plate 250, so that the first accommodation space is sealed by the bottom plate 120, thereby improving the sealing performance of the battery top cover.

In some embodiments, referring to FIG. 7, a ratio of a height h of the tab 220 to a thickness H of the main body 210 is greater than 1:12 and less than 1:4, where the height of the tab 220 refers to a vertical distance from a vertex, away from the main body 210, of the tab 220 to the main body 210, and the thickness of the main body 210 refers to a vertical distance between a side, close to the tab 220, of the main body 210 and a side, away from the tab 220, of the main body 210. For example, the ratio of the height of the tab 220 to the thickness of the main body 210 may be 1:4, 1:5, 1:6, 1:7, 1:8, 1:9, 1:10, 1:11, 1:12, etc. The height of the tab 220 and the thickness of the main body 210 are set in this range, an amount of space is left for the sealing ring 400 to buffer compression, thereby improving the sealing performance of the battery top cover.

In an embodiment, the thickness H of the main body 210 (i.e. a height of the second side plate 250) is 0.6 mm, and the height of the tab 220 is 0.05 mm~0.15 mm. For example, the height of the tab 220 is 0.05 mm, 0.1 mm, 0.15 mm, etc., so that an amount of space of 0.05 mm~0.15 mm is left for the sealing ring 400 to buffer compression, thereby improving the sealing performance of the battery top cover.

In some embodiments, continuing to refer to FIG. 1, FIG. 2 and FIG. 9, the battery top cover further includes an upper plastic component 500 and a terminal post 600. The upper plastic component 500 is disposed on a side, facing away from the lower plastic component, of the cover plate 300, and the terminal post 600 is disposed on a side, facing away from the cover plate 300, of the upper plastic component 500. A second terminal hole 510 is formed in the upper plastic component 500, and the terminal body 110 passes through the second terminal hole 510 and is connected to the terminal post 600.

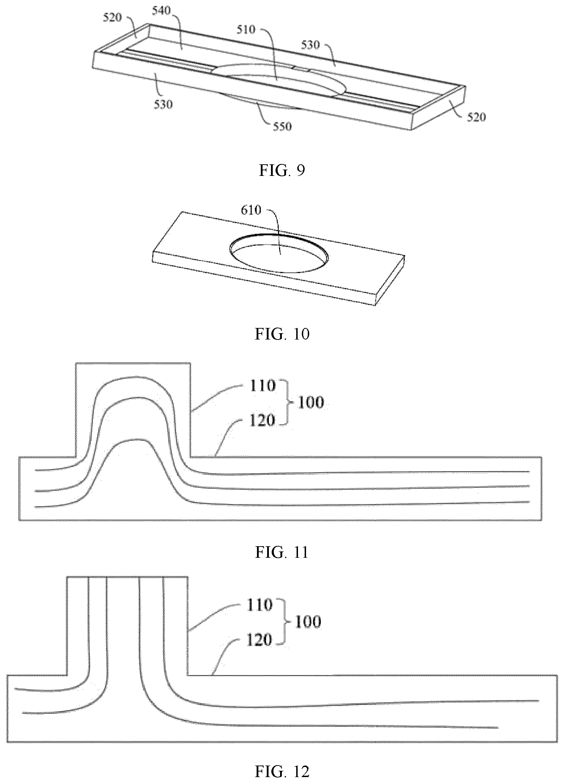

In some embodiments, continuing to refer to FIG. 10, a fourth terminal hole 610 is formed in the terminal post 600, the terminal body 110 passes through the fourth terminal hole 610, and an outer wall of the terminal body 110 is abutted against an inner wall of the fourth terminal hole 610, so that the terminal body 110 may be connected to the terminal post 600.

In some embodiments, continuing to refer to FIG. 9, the upper plastic component 500 includes a second bottom plate 540, two third side plates 520 arranged opposite to each other, and the two fourth side plates 530 arranged opposite to each other. The two third side plates 520 and the two fourth side plates 530 are disposed on a peripheral side of the second bottom plate 540. The second bottom plate 540, the two third side plates 520, and the two fourth side plates 530 are enclosed to form a second accommodation space. An opening direction of the second accommodation space faces away from the cover plate 300. The terminal post 600 is located in the second accommodation space, so that a space in the battery is avoided from being occupied by the terminal post 600, increasing a space utilization rate of the battery.

In some embodiments, continuing to refer to FIG. 9, the second terminal hole 510 is formed in the second bottom plate 540, and an edge of the second terminal hole 510 protrudes in a direction facing away from the terminal post 600 to form a boss 550. The boss 550 is inserted in a gap between an outer wall of the terminal body 110 and an inner wall of the first terminal hole 310, so that the gap between the first terminal hole 310 and the terminal body 110 may be sealed by the boss 550, thereby improving the sealing performance of the battery.

In some embodiments, an end of the sealing ring 400 is abutted against the base 120, and an end of a part, which is inserted into the first terminal hole 310, of the sealing ring 400 is abutted against the boss 550, so that a gap between the third terminal hole 260 and the terminal body 110 may be sealed by the sealing ring 400, and a gap between the first terminal hole 310 and the terminal body 110 may be sealed by the sealing ring 400 and the boss 550, thereby improving the sealing performance of the battery.

In some embodiments, a first connecting part is disposed at an end, facing away from the base 120, of the sealing ring 400, and a second connecting part, which matches the first connecting part, is disposed at an end, away from the second bottom plate 540, of the boss 550. Through the first connecting part and the second connecting part, the end, facing away from the base 120, of the sealing ring 400 may be abutted against the end, away from the second bottom plate 540, of the boss 550, so that the sealing ring 400 is prevented from being displaced after the sealing ring 400 is fitted to the terminal body 110, improving the sealing performance of the battery top cover. For example, the first connecting part may be a protrusion, and the second connecting part may be a groove, which matches the protruding part, so that the end, facing away from the base 120, of the sealing ring 400 is abutted against the end, away from the second bottom plate 540, of the boss 550 through the protrusion and groove matching with each other.

In an embodiment, a shape of the lower plastic component and cover plate 300 may be set according to a shape of the battery applied to the battery top cover. For example, in case that the battery top cover is applied to a square battery, the lower plastic component and cover plate 300 may be in a shape of a cuboid, which is not limited in the present application.

In some embodiments, the lower plastic component is made of PPS material or PSU material. As such, the insulation performance of the battery top cover and the battery cell may be improved, and an electrolyte in the battery may be prevented from corroding the battery top cover, leading to a short circuit in the battery.

In some embodiments, by cold heading process, the base 120 is integrally formed with the terminal body 110 to obtain the terminal 100. Cold heading process is a processing method that with the plastic deformation of metal under an external force, and by means of a mold, a bulk metal is redistributed and transferred to form a required part or blank. The terminal 100 is prepared by cold heading process, so that not only a utilization rate of material is increase, but also a production efficiency of the terminal 100 is increased.

In some embodiments, the terminal 100 may be integrally formed through at least the following three types of processes: the first type: blanking -> cold heading -> punching; the second type: blanking -> cold heading; and the third type: blanking -> bending -> cold heading. From the cold heading process listed above, it should be noted that in case that the base 120 is integrally formed with the terminal body 110 through cold heading process, only two to three steps are needed to obtain the terminal 100, which is simple in process and low in cost.

As shown in FIG. 11, a specific texture structure is formed inside the terminal 100 integrally formed through the first type of cold heading process. The specific texture structure includes multiple lines. The multiple lines extend from a first end of the base 120 to the terminal body 110, and then extend from the terminal body 110 to a second end of the base 120, where the first end is a left end of the base 120, the second end is a right end of the base 120, or the first end is the right end of the base 120, and the second end is the left end of the base 120. The specific texture structure may increase a mechanical stability of the terminal 100. For example, as shown in FIG. 11, the specific texture structure includes three lines, the three lines extend from the left end of the base 120 to the terminal body 110, and then extend from the terminal body 110 to the right end of the base 120.

As shown in FIG. 12, a specific texture structure is formed inside the terminal 100 integrally formed through the second type of cold heading process. The specific texture structure includes multiple lines. One part of the multiple lines extend axially from the first end of the base 120 to the terminal body 110, and another part of the multiple lines extend axially from the second end of the base 120 to the terminal body 110; where the first end is the left end of the base 120, and the second end is the right end of the base 120, or the first end is the right end of the base 120, and the second end is the left end of the base 120. The specific texture structure may also increase the mechanical stability of terminal 100. For example, as shown in FIG. 12, the specific texture structure includes four lines, two lines extend axially from the left end of the base 120 to the terminal body 110, and the other two lines extend axially from the right end of the base 120 to the terminal body 110.

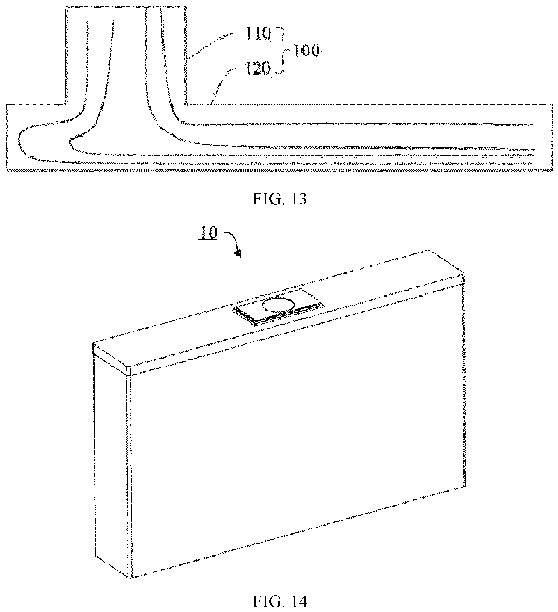

As shown in FIG. 13, a specific texture structure is formed inside the terminal 100 integrally formed through the third type of cold heading process. The specific texture structure includes multiple lines. The multiple lines extend axially from the same end of the base 120 to the terminal body 110. One part of the multiple lines bypass the second end of the base 120 from the first end of the base 120, and then extend to the terminal body 110 along an axial direction of the terminal body 110, another part of the lines extend directly from the first end of the base 120 to the terminal body 110, where the first end is the left end of the base 120, and the second end is the right end of the base 120, or the first end is the right end of the base 120, and the second end is the left end of the base 120. The specific texture structure may also increase the mechanical stability of the terminal 100. For example, as shown in FIG. 13, the specific texture structure includes four lines, two lines bypass the left end of the base 120 from the right end of the base 120, and then extend along the axial direction of the terminal body 110 to the terminal body 110, and the other two lines extend directly from the right end of the base 120 to the terminal body 110.

In an embodiment, shapes of the terminal body 110 and the first bottom plate 230 may be set as required. For example, the terminal body 110 is in a shape of a cylinder, and the first bottom plate 230 is in a shape of a cuboid. Shapes of the third terminal hole 260 and the first terminal hole 310 are adapted to the shape of the terminal body 110. For example, the terminal body 110 is in a shape of a cylinder, and the third terminal hole 260 and the first terminal hole 310 are in a shape of a circular.

Embodiments further provides a battery, and the battery includes a battery top cover. In the battery top cover of the battery provided in the embodiments, the terminal body 110 passes through the lower plastic component 200, the sealing ring 400, and the first terminal hole 310 in sequence; the base 120 is located on a side, facing away from the cover plate 300, of the lower plastic component; the elastic part is disposed on a side of the lower plastic component 200; two ends of the sealing ring 400 are abutted against the base 120 and the cover plate 300 respectively; and one side of the lower plastic component 200 is elastically abutted against one of the base 120 or the cover plate 300 through the elastic part, and another side is directly abutted against another one of the base 120 and the cover plate 300; so that the compression range of the sealing ring 400 is ensured and the sealing of the battery top cover is improved.

Currently, a battery generally includes a casing, an electrode assembly and a battery top cover. The electrode assembly is electrically connected to the battery top cover. The battery top cover closes an opening of the casing. The casing may be connected and fixed to the battery top cover by welding to provide a closed space for the electrode assembly and the electrolyte.

After a battery cell has been assembled, an insulation layer is usually wrapped around a surface of the battery cell, and a layer of top cover insulation sheet is disposed on an outer surface of the battery top cover.

The inventors have noted that in the battery top cover of the battery, there easily is an assembly gap between the cover plate and the upper plastic component, which can easily cause abnormal conditions such as short circuit of the battery during later use. Therefore, the embodiments of the present application provide a battery, a battery pack, and an electrical device, in which the top cover insulation sheet is attached to a side wall of the upper plastic component, the assembly gap between the top cover insulation sheet and the upper plastic component is avoided, so that the insulation performance of the battery top cover is improved, and the safety of the battery ground is enhanced. Please refer to the following description for the particular solutions.

It should be noted that in the following, the terms "battery module", "battery", "battery element", "battery cell", and "battery pack" are interchangeable and may refer to any of a variety of different rechargeable battery and chemistry constructions, including but not limited to lithium ions (e.g. lithium phosphate, lithium cobalt oxide, lithium iron phosphate, other oxidized metal lithium, etc.), lithium ion polymers, nickel metal hydrides, nickel cadmium, nickel hydrogen, nickel zinc, silver zinc or other battery types/constructions. The term "electric vehicle" is used here to refer to an all-electric vehicle also known as EV, a plug-in hybrid vehicle also known as PHEV, or a hybrid electric vehicle (HEV), where the hybrid vehicle uses one of them as multiple propulsion sources for an electric drive system.

The embodiments of the present application may usually be applied to systems using electric motors, and more specifically, rather than exclusively, to electric vehicles using multiphase motors (such as induction motors). Electric vehicles use one or more storage energy sources such as battery packs to provide power to the vehicle. This energy is used at least in part to propel the vehicle. The stored energy may also be configured for providing energy for other vehicle systems, such as vehicle lighting, vehicle partitionable heating, ventilation, and air conditioning (HVAC) systems, auxiliary control systems (e.g., sensors, displays, navigation systems, etc.), vehicle entertainment systems (e.g., radio, DVD, MP3, etc.). Conventional electric vehicles include passenger vehicles and vehicles designed to transport goods. Examples include passenger vehicles, trucks, electric bicycles and leisure ships. Electric vehicles also include dedicated work vehicles and trolleys, some of which may be integrated with such as forklifts, scissor lifts, lifting and/or crank arm aerial work platforms, street cleaning systems, conveyor belts and flat handling platforms.

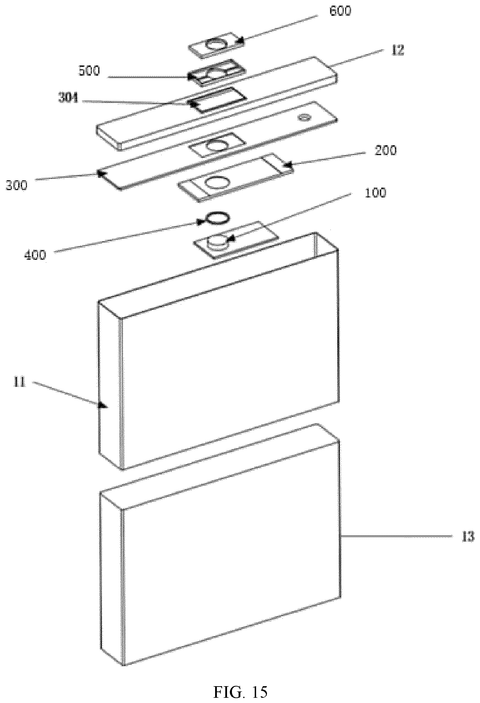

Referring to FIG. 14 to FIG. 18, FIG. 14 is a three-dimensional schematic diagram of a structure of the battery provided in an embodiment of the present application. The battery 10 includes a casing 11, a battery top cover, and a top cover insulation sheet 12. The battery top cover includes a cover plate 300, and an upper plastic component 500, where the cover plate 300 is closed to an opening of the casing 11, and the upper plastic component 500 is disposed on a side, away from the casing 11, of the cover plate 300, and the top cover insulation sheet 12 is disposed on the surface, away from the casing 11, of the cover plate 300. A first through hole 304 is formed in the top cover insulation sheet 12, the upper plastic component 500 passes through the first through hole 304, and the top cover insulation sheet 12 is attached to a side wall of the upper plastic component 500.

In some embodiments of the present application, the top cover insulation sheet 12 is attached to the side wall of the upper plastic component 500, and the assembly gap between the top cover insulation sheet 12 and the upper plastic component 500 is avoided, so that the insulation performance of the battery top cover is improved, and the safety of the battery 10 ground is improved.

In some embodiments of the present application, the top cover insulation sheet 12 includes a first attachment surface 301 and a second attachment surface 302. The first attachment surface 301 is attached to a surface, away from the casing 11, of the cover plate 300, and the second attachment surface 302 is attached to a side wall of the upper plastic component 500.

In some embodiments of the present application, a ratio of a height of the second attachment surface 302 to a height of a side wall of the upper plastic component 500 is greater than or equal to 0.15 and less than or equal to 0.7. As such, it can ensure that the second attachment surface 302 does not affect the normal operation of battery 10, meanwhile the assembly gap between the cover plate 300 and the upper plastic component 500 can be avoided, and ensure that detachment is not easily occurred in later period, improving the long-term safety of the battery 10.

In an embodiment of the present application, a height of the second attachment surface 302 attached to the side wall of the upper plastic component 500 is in a range of 0.5 mm to 2 mm.

In some embodiments of the present application, a first insulation layer 13 is disposed on an outer surface of the casing 11. Along a length direction of the battery 10, a distance between an end, close to the battery top cover, of the first insulation layer 13 and an end, close to the battery top cover, of the casing 11 is kept at a preset length. The top cover insulation sheet 12 further includes a third attachment surface 303, the third attachment surface 303 is attached to the outer surface of the casing 11, and an attachment length of the third attachment surface 303 is greater than or equal to the preset length, so that the top cover insulation sheet 12 is connected with the first insulation layer 13. As such, by keeping the distance between the end, close to the battery top cover, of the first insulation layer 13 and the end, close to the battery top cover, of the casing 11 at the preset length, a folding area of the first insulation layer 13 on the outer surface of the cover plate 300 may be avoided, and unevenness and warping of the outer surface of the cover plate 300 are prevented. Furthermore, by attaching the third attachment surface 303 of the top cover insulation sheet 12 to the outer surface of the casing 11, and the attachment length of the third attachment surface 303 is greater than or equal to the preset length, the top cover insulation sheet 12 is coincided with the first insulation layer 13, ensuring the sealing and insulation between the casing and the battery top cover.

In some embodiments of the present application, the preset length is in a range of 5 mm to 10 mm. As such, an overlapping area between the top cover insulation sheet 12 and the first insulation layer 13 may be reduced, minimizing a thickening area of the battery cell and facilitating preparation.

In some embodiments of the present application, a dimension of the top cover insulation sheet 12 coincided with the first insulation layer 13 is greater than 0 cm and less than or equal to 10 cm. As such, it can ensure that there is an overlapping area between the top cover insulation sheet 12 and the first insulation layer 13, so that a separation between the top cover insulation sheet 12 and the first insulation layer 13 in later stage, which leads to an exposure of the battery 10, is avoided, reducing the risk of insulation problems in the battery 10.

In some embodiments of the present application, the casing 11 is in a structure of a square, and the battery top cover and the top cover insulation sheet 12 are in a structure of a square, which are adapted to an end shape of the casing 11 along the length direction of the battery 10.

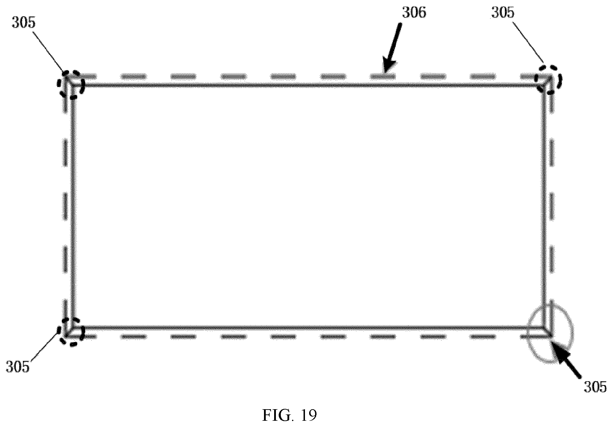

In some embodiments of the present application, as shown in FIG. 19, an incision 305 is formed at the second attachment surface 302. The second attachment surface 302 includes a distal-to-center end facing the first attachment surface 301 and a proximal-to-center end away from the first attachment surface 301. The second attachment surface 302 includes a first edge located on the proximal-to-center end and a second edge located on the distal-to-center end. The first edge and the second edge are in a shape of a rectangle, and the incision 305 is formed at a connecting line between a vertex of the first edge and an adjacent vertex of the second edge. As such, an assembly of the top cover insulation sheet 12 in early stage may be facilitated.

In addition, the "center" in the proximal-to-center end and the distal-to-center end refers to centers of diagonals of the first edge and the second edge.

In an embodiment of the present application, four incisions 305 may formed at the top cover insulation sheet 12.

In some embodiments of the present application, the first attachment surface 301 and the second attachment surface 302 are integrally formed with the third attachment surface 303. As such, the overall sealing and insulation performances of the top cover insulation sheet 12 may be ensured.

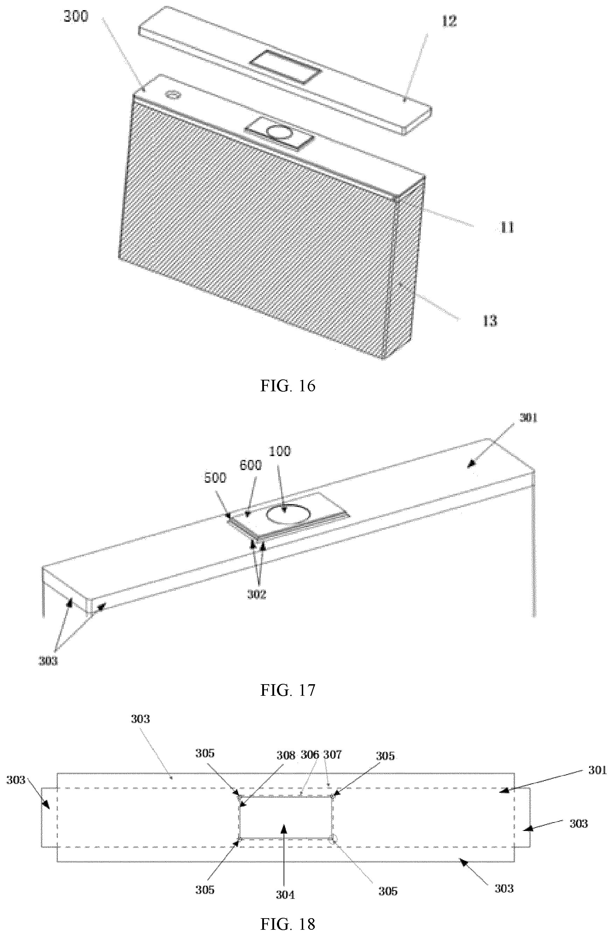

In this embodiment of the present application, in case that the first attachment surface 301, the second attachment surface 302 and the third attachment surface 303 are in an unfolded state, as shown in FIG. 18, the top cover insulation sheet 12 includes a first fold 306, a second fold 307, and an edge line 308 with the first through hole 304. In addition, the first attachment surface 301 corresponds to an area between the first fold 306 and the second fold 307, an area between the first fold 306 and the edge line 308 corresponds to the second attachment surface 302, and the third attachment surface 303 corresponds to an area outside the second fold 307.

It should be noted that the first edge corresponds to the edge line 308, and the second edge corresponds to the first fold 306.

In some of the embodiments of the present application, an electrolyte-resistant protective glue is applied between the upper plastic component 500 and the cover plate 300 to prevent the electrolyte from infiltrating between the upper plastic component 500 and the cover plate 300. As such, a risk of the electrolyte flowing into the assembly gap between the upper plastic component 500 and the cover plate 300 may be avoided.

In addition, the electrolyte-resistant protective glue may include polyurethane glue and polyester elastic glue.

In some embodiments of the present application, the battery top cover may further include a terminal 100, a sealing ring 400, a lower plastic component 200, and a terminal post 600. During assembly, an electrode assembly may be disposed in the casing 11, and then the battery top cover may be assembled. For example, the sealing ring 400 is disposed on the terminal 100, and then the lower plastic component 200 and the upper plastic component 500 are disposed on the cover plate 300. The terminal 100 passes in sequence through the lower plastic component 200, the cover plate 300, and the upper plastic component 500, and then the terminal post 600 is disposed on a top end of the terminal 100 to complete an assembly of the battery top cover. Thereafter, the battery top cover may be assembled with the casing 11, including a connection between the terminal 100 and the electrode assembly, and a sealing process of the battery top cover and the casing 11. After completing the above assembly steps, a first insulation layer 13 may be disposed on the casing 11, and then the top cover insulation sheet 12 may be disposed on the battery top cover.

It should be noted that the first insulation layer 13 may also be disposed on the casing 11 in advance.

Furthermore, the present application further provides a battery pack, including multiple batteries 10.

In embodiments of the present application, the top cover insulation sheet 12 is attached to a side wall of the upper plastic component 500, and the assembly gap between the top cover insulation sheet 12 and the upper plastic component 500 is avoided, so that the insulation of the battery top cover is improved, and the safety of the battery 10 ground is improved, and the safety of the battery pack as a whole is improved.

Furthermore, the present application further provides an electrical device, including a battery pack configured for providing electrical energy.

In addition, the electrical device includes but is not limited to a new energy vehicle.

In the embodiments of the present application, the top cover insulation sheet 12 is attached to the side wall of the upper plastic component 500, and the assembly gap between the top cover insulation sheet 12 and the upper plastic component 500 is avoided, so that the insulation performance of the battery top cover is improved, and the safety of the battery 10 is improved. Further, the safety of the battery pack as a whole is improved, and the safety of the use of electrical device is improved.

## Claims

1. A battery top cover, **characterized in that** the battery top cover comprises a terminal (100), a lower plastic component (200), a cover plate (300), and a sealing ring (400), the terminal (100) comprises a base (120) and a terminal body (110) disposed on the base (120), a first terminal hole (310) is formed in the cover plate (300), the terminal body (110) passes through the lower plastic component (200), the sealing ring (400), and the first terminal hole (310) in sequence, the base (120) is located on a side, facing away from the cover plate (300), of the lower plastic component (200), and two ends of the sealing ring (400) are respectively abutted against the base (120) and the cover plate (300).

2. The battery top cover of claim 1, wherein an elastic part is disposed on one side of the lower plastic component (200), the one side of the lower plastic component (200) is elastically abutted against one of the base (120) or the cover plate (300) through the elastic part, and another side of the lower plastic component (200) is directly abutted against another one of the base (120) or the cover plate (300).

3. The battery top cover of claim 2, wherein the lower plastic component (200) further comprises a main body (210), the elastic part comprises a tab (220), and the tab (220) is connected to the main body (210) and spaced apart from the main body (210) at a non-connected position; and
a ratio of a height of the tab (220) to a thickness of the main body (210) is greater than 1:12 and less than 1:4.

4. The battery top cover of claim 3, wherein the tab (220) comprises two connecting parts (221) on both sides and an abutting part (222) between the two connecting parts (221), the two connecting parts (221) are connected to the main body (210), the abutting part (222) is spaced apart from the main body (210), and one of the two connecting parts (221) on at least one side of the tab (220) is inclined.

5. The battery top cover of claim 2, wherein the elastic part is integrally formed with the lower plastic component (200).

6. The battery top cover of claim 2, wherein the lower plastic component (200) comprises a first bottom plate (230), two first side plates (240) arranged opposite to each other, and two second side plates (260) arranged opposite to each other, the two first side plates (240) and the two second side plates (260) are disposed on a peripheral side of the first bottom plate (230), the first bottom plate (230), the two first side plates (240), and the two second side plates (260) are enclosed to form a first accommodation space, and the base (120) is located in the first accommodation space; and
two elastic parts are respectively disposed on sides, close to the cover plate (300), of the two second side plates (260), a length of each of the two second side plates (260) is greater than a length of each of the two elastic parts, and a width of each of the two second side plates (260) is greater than or equal to a width of each of the two elastic parts.

7. The battery top cover of claim 1, further comprising an upper plastic component (500) and a terminal post (600), wherein the upper plastic component (500) is disposed on a side, facing away from the lower plastic component (200), of the cover plate (300), the terminal post (600) is disposed on a side, facing away from the cover plate (300), of the upper plastic component (500), a second terminal hole (510) is formed in the upper plastic component (500), the terminal body (110) passes through the second terminal hole (510) and is connected to the terminal post (600), an edge of the second terminal hole (510) protrudes in a direction facing away from the terminal post (600) to form a boss (550), and the boss (550) is inserted into a gap between an outer wall of the terminal body (110) and an inner wall of the first terminal hole (310); and
an end of a part of the sealing ring (400) inserted into the first terminal hole (310) is abutted against the boss (550).

8. The battery top cover of any one of claims 1 to 7, wherein the base (120) is integrally formed with the terminal body (110).

9. The battery top cover of claim 8, wherein a texture structure is formed inside the terminal (100), and the texture structure comprises a plurality of lines;
the plurality of lines extend from a first end of the base (120) to the terminal body (110), and then extend to a second end of the base (120);
one part of the plurality of lines extend axially from the first end of the base (120) to the terminal body (110), and another part of the plurality of lines extend axially from the second end of the base (120) to the terminal body (110); or
one part of the plurality of lines bypass the second end of the base (120) from the first end of the base (120), and then extend to the terminal body (110) along an axial direction of the terminal body (110), and another part of the lines extend directly from the first end of the base (120) to the terminal body (110).

10. A battery (10), **characterized in that** the battery comprises:
a casing (11);
the battery top cover of any one of claims 1 to 6 and claims 8 to 9, the cover plate (300) closes an opening of the casing (11), and the battery top cover further comprises an upper plastic component (500); and
a top cover insulation sheet (12), disposed on a surface, away from the casing (11), of the cover plate (300), a first through hole (304) is formed in the top cover insulation sheet (12), the upper plastic component (500) passes through the first through hole (304), and the top cover insulation sheet (12) is attached to a side wall of the upper plastic component (500).

11. The battery of claim 10, wherein the top cover insulation sheet (12) comprises a first attachment surface (301) and a second attachment surface (302), the first attachment surface (301) is attached to a surface, away from the casing (11), of the cover plate (300), and the second attachment surface (302) is attached to a side wall of the upper plastic component (500); and
a range of a ratio of a height of the second attachment surface (302) to a height of a side wall of the upper plastic component (500) is greater than or equal to 0.15 and less than or equal to 0.7.

12. The battery of claim 11, wherein a first insulation layer (13) is disposed on an outer surface of the casing (11);
along a length direction of the battery (10), a distance between an end, close to the battery top cover, of the first insulation layer (13) and an end, close to the battery top cover, of the casing (11) is kept at a preset length; and
the top cover insulation sheet (12) further comprises a third attachment surface (303), the third attachment surface (303) is attached to the outer surface of the casing (11), and an attachment length of the third attachment surface (303) is greater than or equal to the preset length, and the top cover insulation sheet (12) is connected with the first insulation layer (13);
the first attachment surface (301) and the second attachment surface (302) are integrally formed with the third attachment surface (303); and
a dimension of the top cover insulation sheet (12) coincided with the first insulation layer (13) is greater than 0 cm and less than or equal to 10 cm.

13. The battery of claim 11, wherein an incision (305) is formed at the second attachment surface (302), the second attachment surface (302) comprises a distal-to-center end facing the first attachment surface (301) and a proximal-to-center end away from the first attachment surface (301), the second attachment surface (302) comprises a first edge located on the proximal-to-center end and a second edge located on the distal-to-center end, the first edge and the second edge are in a shape of a rectangle, and the incision (305) is formed at a connecting line between a vertex of the first edge and an adjacent vertex of the second edge; and
an electrolyte-resistant protective glue is applied between the upper plastic component (500) and the cover plate (300), and an electrolyte is prevented from infiltrating between the upper plastic component (500) and the cover plate (300).

14. A battery pack, **characterized in that** the battery pack comprises the battery (10) of any one of claims 10 to 13.

15. An electric device, **characterized in that** the electric device comprises the battery pack of claim 14, the battery pack being configured to provide electrical energy.
